Europäisches Patentamt

European Patent Office

Office européen des brevets

(11) Veröffentlichungsnummer: **0 023 714**
**B1**

# EUROPÄISCHE PATENTSCHRIFT

(45) Veröffentlichungstag der Patentschrift:
23.11.83

(51) Int. Cl.³: **H 04 M 19/08**

(21) Anmeldenummer: 80104563.4

(22) Anmeldetag: 01.08.80

(54) Schaltungsanordnung zum Speisen einer eine konstante Betriebsspannung liefernden Stromversorgungseinrichtung.

(30) Priorität: 07.08.79 DE 2931922

(43) Veröffentlichungstag der Anmeldung:
11.02.81 Patentblatt 81/6

(45) Bekanntmachung des Hinweises auf die Patenterteilung:
23.11.83 Patentblatt 83/47

(84) Benannte Vertragsstaaten:
AT BE CH FR GB IT LI LU NL SE

(56) Entgegenhaltungen:
DE - A - 2 043 611
DE - A - 2 604 935

(73) Patentinhaber: Licentia Patent-Verwaltungs-GmbH,
Theodor-Stern-Kai 1, D-6000 Frankfurt/Main 70 (DE)

(72) Erfinder: Rall, Bernhard, Dipl.-Ing., Albecker Steige 67,
D-7900 Ulm (DE)

(74) Vertreter: Schickle, Gerhard, Dipl.-Ing. et al, Licentia
Patent-Verwaltungs-GmbH Theodor-Stern-Kai 1,
D-6000 Frankfurt/Main 70 (DE)

ACTORUM AG

Schaltungsanordnung zum Speisen einer eine konstante Betriebsspannung liefernden
Stromversorgungseinrichtung

Die Erfindung betrifft eine Schaltungsanordnung zum Speisen einer eine konstante Betriebsspannung liefernden Stromversorgungseinrichtung.

Teilnehmerstationen (Endstellen) von Fernmelde- und Fernsprechanlagen werden über die Teilnehmeranschlussleitung, hier kurz Anschlussleitung genannt, gespeist. Die Endgeräte erhalten hierzu ihren Speisestrom z.B. aus einer 60 V Amtsbatterie über eine Drosselspule oder Relaiswicklung, welche einen Wicklungswiderstand von 1 kΩ hat. Je nach Länge der Teilnehmeranschlussleitung, deren ohmscher Widerstand bis zu 2,5 kΩ betragen darf, ergeben sich dadurch im Kurzschlussfall Schleifenströme zwischen 17 und 60 mA.

Dem Schleifenstrom überlagert ist der Sprechstrom oder gegebenenfalls ein niederfrequenter Signalstrom. Für diesen soll das Endgerät einen Wechselstromwiderstand von z.B. 600 Ω haben.

Künftig werden immer mehr Funktionen der Endgeräte, wie z.B. die Wahlsignalabgabe, von integrierten Schaltungen (Bausteinen) ausgeführt. Um in diesen mit möglichst wenig Verlustleistung auszukommen und um genügend Sicherheitsabstand von der maximal zulässigen Betriebsspannung der Bausteine zu haben, ist eine möglichst niedrige Betriebsspannung an den Anschlussklemmen der Endstelle wunschenswert. Anderseits sollen gelegentlich auftretende hohe Amplituden dem Gleichstrom überlagerter Tonsignale unverzerrt übertragen werden.

Ist z.B. ein Baustein eines Endgerätes für eine Betriebsspannung von 3 V vorgesehen und mit einer Maximalamplitude der überlagerten Wechselspannung von 2,8 V zu rechnen, so ist ohne zusätzliche Wechselstromdrossel oder ohne zusätzliche Schaltungsmassnahmen für eine unverzerrte Wechselspannung theoretisch eine Klemmengleichspannung von mindestens 3 V + 2,8 V = 5,8 V erforderlich, wobei jedoch als weiteres Problem die Realisierung eines linearen Wechselstromwiderstandes bestimmter Grösse hinzukommt.

Aus der DE-OS 2 043 611 ist eine Schaltungsanordnung zur Ladung eines als Spannungsquelle in dezentralen Einrichtungen einer Fernmeldeanlage dienenden Kondensators am Ende einer langen, nur geringe Leistung übertragenden Leitung bekannt, bei der die Ladung des Kondensators mit einem konstanten Strom erfolgen soll. Als Konstantstromquelle ist eine gegengekoppelte Verstärkerstufe vorgesehen. Diese Schaltungsanordnung vermag jedoch nicht bei niedrigen Betriebsspannungen an den Anschlussklemmen der dezentralen Einrichtung gelegentlich auftretende hohe Amplitude von dem Gleichstrom überlagerten Tonsignalen unverzerrt zu übertragen. Auch weist sie in diesen Fällen keinen linearen Wechselstromwiderstand auf.

Der Erfindung liegt die Aufgabe zugrunde, die genannten Schwierigkeiten zu überwinden. Insbesondere soll eine Schaltungsanordnung der im Oberbegriff des Patentanspruchs 1 genannten Art angegeben werden, die noch unterhalb der Betriebsspannung des Bausteins einen linearen Wechselstromwiderstand besitzt und keine Verzerrungen des dem Schleifenstrom überlagerten Wechselstroms verursacht.

Die Aufgabe wird durch die im Anspruch 1 genannte Erfindung gelöst. Die erfindungsgemässe Schaltungsanordnung kann bei einer Klemmenspannung von 5,5 V und überlagerten Tonsignalspannungen mit 3 V Amplitude ohne diese zu verzerren arbeiten und dabei eine stabilisierte Gleichspannung von 3 V an einen Baustein abgeben. Im genannten Schwankungsbereich des Schleifenstroms bleibt dabei der Wechselstromwiderstand der Schaltungsanordnung konstant.

Vorteilhafte Ausgestaltungen der Erfindung sind in den Unteransprüchen 2 und 3 angegeben. Durch die Weiterbildung der Erfindung gemäss Anspruch 4 ist der Wechselstromwiderstand der Schaltungsanordnung getrennt einstellbar, z.B. auf einen Wert von 600 Ω.

Die Erfindung wird nun anhand von Zeichnungen und einem Ausführungsbeispiel näher erläutert. Es zeigen im einzelnen:

Fig. 1 Schaltbild des Ausführungsbeispiels;

Fig. 2 Zeitlicher Verlauf einer angenommenen Klemmenspannung;

Fig. 3 Zeitlicher Verlauf des Speisestromes;

Fig. 4 Zeitlicher Verlauf des abgeleiteten Stromes;

Fig. 5 Prinzipschaltbild der Schaltungsanordnung gemäss der Erfindung.

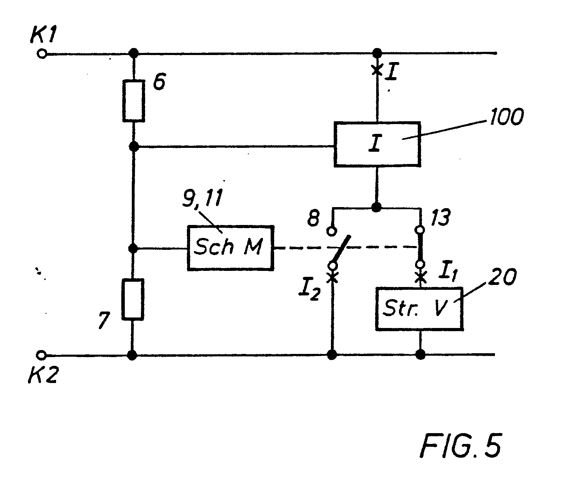

Zunächst sei anhand der Fig. 5 das Prinzip der Schaltungsanordnung gemäss der Erfindung erläutert. Mit 6 und 7 ist ein an die Klemmen K1 und K2 einer Teilnehmerendstelle angeschlossener Spannungsteiler bezeichnet, der aus der Reihenschaltung eines Widerstandes 6 mit einem Widerstand 7 besteht und an dessen Abgriff zum einen eine den Speisegleichstrom bestimmende Einrichtung 100 und zum anderen Schaltmittel 9, 11 angeschlossen sind. Die Einrichtung 100 speist bei ausreichender Grösse der Eingangsspannung (Spannung zwischen den Klemmen K1 und K2) über einen Schalter 13 und Stromkreis $I_1$ eine eine konstante Betriebsspannung liefernde Stromversorgungseinrichtung 20. Bei einer Eingangsspannung, die zum Speisen der Stromversorgungseinrichtung 20 nicht mehr ausreicht, wird jedoch der Stromkreis $I_1$ von den Schaltmitteln 9, 11 unterbrochen und über den Schalter 8 ein Umgehungsstromkreis $I_2$ (Belastungsstromkreis) geschaltet. Die Schaltmittel 9, 11 werden also in Abhängigkeit von der Grösse der Eingangsspannung wirksam und schalten bei zum Speisen der Stromversorgungseinrichtung 20 ausreichender Grösse der Eingangsspannung den Speisestromkreis $I_1$ von der einen Klemme K1 über Einrichtung 100, Schalter 13, Stromversorgungseinrichtung 20 zur Klemme K2 durch, wobei Schalter 8 geöffnet ist. Bei zum Speisen der Stromversorgungseinrichtung 20 nicht ausreichender Grösse der Eingangsspannung wird der Speisestromkreis durch den Schalter 13 unterbrochen und ein die Stromversorgungseinrichtung 10 umgehender Belastungsstromkreis $I_2$ von der Klemme K1 über die Einrichtung 100 und Schalter 8 zur Klemme K2 durchgeschaltet.

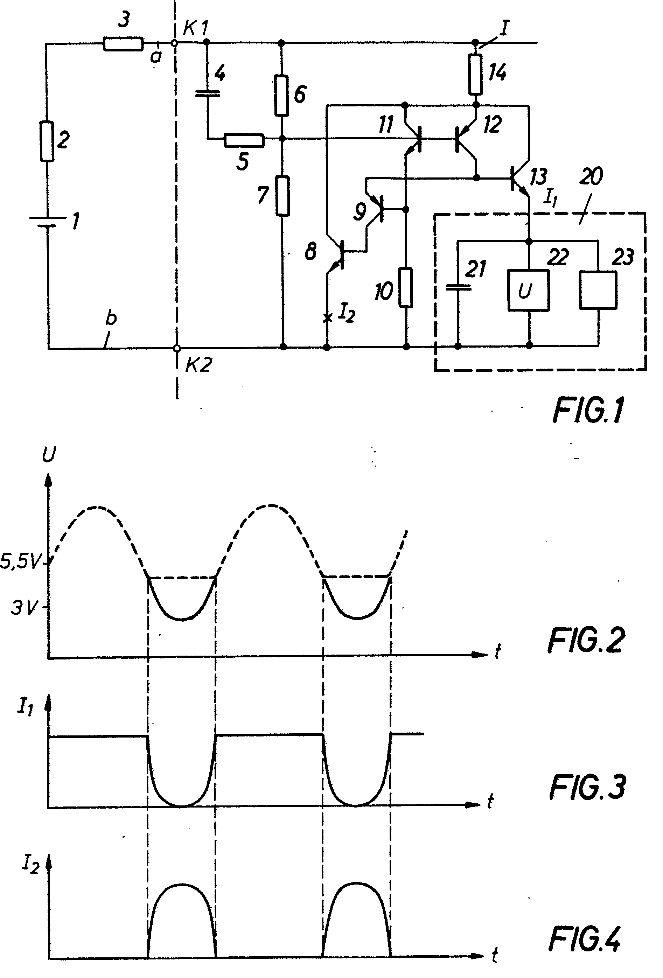

In Fig. 1 ist ein vorteilhaftes Ausführungsbeispiel der Erfindung dargestellt. Die der Fig. 5 entsprechenden Bauteile sind mit gleichen Bezugsziffern versehen. Die Teilnehmerstation (das Endgerät) mit den Klemmen K1 und K2 ist an der a- und b-Ader der Anschlussleitung angeschlossen, deren Leitungswiderstand als Widerstand 3 dargestellt ist und die vom Amt von einer 60-V-Amtsbatterie 1 über den Gleichstromwiderstand 2 einer Drossel- oder Relaiswicklung von 1 kΩ gespeist wird. Die in der Teilnehmerstation eingebaute erfindungsgemässe Schaltungsanordnung umfasst die Bauteile 4 bis 14. Der zu speisende Baustein ist mit 20 bezeichnet. Seine Betriebsspannung wird durch eine Konstantspannungsschaltung 22, im einfachsten Fall einer Zenerdiode, konstant gehalten, der ein Kondensator 21 parallel geschaltet ist. Mit 23 sind die mit der konstanten Betriebsspannung zu versorgenden Schaltungsteile der Teilnehmerstation bezeichnet.

Die den Speisegleichstrom bestimmende Einrichtung (100 in Fig. 5) besteht aus einer aus der DE-OS 2 043 611 bekannten Schaltung. Es ist eine gegengekoppelte Verstärkerstufe mit zwei komplementären Transistoren 12 und 13, die als komplementäre Darlington-Schaltung bezeichnet wird.

Der emitterseitige Transistor 12 der Darlington-Schaltung ist von einem ersten Leitfähigkeitstyp, im Ausführungsbeispiel vom PNP-Typ. Sein Emitter ist über einen Emitterwiderstand 14 an die eine Anschlussklemme K1 der Anschlussleitung und seine Basis an den an die beiden Anschlussklemmen K1 und K2 der Anschlussleitung geschalteten Basisspannungsteiler 6, 7 angeschlossen.

Der kollektorseitige Transistor 13 der komplementären Darlington-Schaltung ist vom zweiten Leitfähigkeitstyp, im Ausführungsbeispiel also vom NPN-Typ und mit seinem Emitter mit der Stromversorgungseinrichtung 20 verbunden.

Sinkt bei einer bis hier beschriebenen Schaltung die Spannung am Emitter des Transistors 12, die etwa 0,3 bis 1 V unter der Spannung zwischen den Klemmen K1 und K2 liegt, unter die Spannung am Kondensator 21, so wird ohne weitere Schaltungsmassnahmen der Transistor 13 gesperrt, der Wechselstromwiderstand der Schaltungsanordnung undefiniert und der dem Schleifenstrom überlagerte Wechselstrom verzerrt. Um dies zu vermeiden, wird nun der Transistor 13 in vorteilhafter Weise als ein Schalter für den Speisestromkreis $I_1$ verwendet.

Als Schaltmittel zum Umschalten des Speisestromes $I_1$ ist ein erster Transistor 11 vom zweiten Leitfähigkeitstyp (NPN-Typ) und ein zweiter Transistor 9 vom ersten Leitfähigkeitstyp (PNP-Typ) vorgesehen. Transistor 11 ist mit seinem Kollektor am Verbindungspunkt zwischen Emitterwiderstand 14 und emitterseitigem Transistor 12 der Darlington-Schaltung, mit seiner Basis am Verbindungspunkt zwischen Basisspannungsteiler 6, 7 und Basis des emitterseitigen Transistors 12 und mit seinem Emitter zum einen über einen Widerstand 10 an der anderen Anschlussklemme K2 der Anschlussleitung und zum anderen an der Basis des zweiten Transistors 9 angeschlossen.

Der zweite Transistor 9 ist mit seinem Emitter am Verbindungspunkt zwischen Kollektor des emitterseitigen Transistors 12 und Basis des kollektorseitigen Transistors 13 und mit seinem Kollektor an der Basis eines im Belastungsstromkreises $I_2$ liegenden dritten Transistors 8 vom zweiten Leitfähigkeitstyp angeschlossen. Ferner ist Transistor 8 mit seinem Kollektor am Verbindungspunkt zwischen Emitterwiderstand 14 und emitterseitigem Transistor 12 und mit seinem Emitter an der anderen Anschlussklemme K2 angeschlossen. Transistor 8 wird folglich vom Transistor 9 gesteuert und schaltet den Belastungsstromkreis.

Der Transistor 11 ist mit seinem Emitterwiderstand 10 als Emitterfolger geschaltet und stets leitend. Sein Emitterpotential und damit das Basispotential des Transistors 9 ist somit um den Spannungsabfall an seiner Basis-Emitter-Strecke niedriger als das Potential am Spannungsteiler, der durch die Widerstände 6 und 7 gebildet ist. Solange der Transistor 13 infolge ausreichend hoher Spannung zwischen den Klemmen K1 und K2 leitend ist, ist die Emitterspannung des Transistors 9 lediglich um die Basis-Emitter-Spannung des Transistors 13 höher als die Spannung der Konstantsspannungsquelle 22 der Stromversorgungseinrichtung 20. Der Transistor 9 ist folglich durch ein gegenüber seinem Emitter höheres Basisspannungspotential gesperrt. Der fehlende Kollektorstrom des Transistors 9 hält den Transistor 8 gesperrt, so dass dann der Ableitstrom $I_2 = 0$ ist und praktisch der gesamte Strom I, der durch den Widerstand 14 fliesst, über den Transistor 13 als Speisestrom für die Stromversorgungseinrichtung 20 dient.

Ist jedoch der Transistor 13 infolge einer zu niedrigen Klemmenspannung zwischen den Klemmen K1 und K2 gesperrt, so wird vom Transistor 12 über seinen Kollektor ein Strom in den Emitter des Transistors 9 eingespeist, wodurch Transistor 9 und damit auch der Transistor 8, dessen Basis vom Kollektorstrom des Transistors 9 gespeist ist, auch leitend gesteuert wird. Das Emitterpotential des Transistors 9 ist nun durch den Kollektorstrom des Transistors 12 und somit durch den Spannungsabfall an der nun in Durchlassrichtung betriebenen Emitter-Basis-Strecke des Transistors 9 gegeben. Mit leitendem Transistor 8 wird der grösste Teil des durch den Widerstand 14 fliessenden Stromes I über den Transistor 8 als Strom $I_2$ abgeleitet, und über den Transistor 12 fliesst nur noch so viel Strom, wie erforderlich ist, um über den Transistor 9 den Transistor 8 leitend zu halten.

Fig. 2 zeigt den Verlauf eines sinusförmigen Tonfrequenzsignals zwischen den Klemmen K1 und K2 der Anschlussleitung bei einer Spannung von 3 V am Kondensator 21. Die vom Schleifengleichstrom bewirkte Spannung an den Klemmen K1 und K2 betrage beispielsweise 5,5 V. Die Amplitude der überlagerten Wechselspannung sei 3 V.

Ohne Stromableitung über den Transistor 8 ergibt sich der strichliert dargestellte Kurvenverlauf. Er zeigt, dass die Spannung unterhalb 4,5 V abgeflacht ist und das Wechselspannungssignal somit verzerrt wird, woraus eine unerwünschte Verzerrung der Tonübertragung folgt, die mit erheblichen Änderungen des Wechselstromwiderstandes der Schaltungsanordnung verbunden ist. Bei Vorhandensein der Ableitung des Schleifenstromes über den Transistor 8 wird diese Abflachung vermieden.

In Fig. 3 ist der Verlauf des Speisestromes $I_1$, der durch den Emitter des Transistors 13 fliesst, dargestellt und in Fig. 4 der Verlauf des abgeleiteten Stromes $I_2$, der im wesentlichen über die Kollektor-Emitter-Strecke des Transistors 8 fliesst. Sinkt die Klemmenspannung unter 4,5 V, so hört der Speisestrom $I_1$ auf zu fliessen und wird vom Transistor 8 als Ableitstrom $I_2$ in gewünschter Weise übernommen. Während der kurzen Zeit, in der der Speisestrom unterbrochen ist, hat der Kondensator 21 die Aufgabe, den Speisestrom zu liefern.

Durch die erfindungsgemässe Schaltungsanordnung wird folglich der Einsatzpunkt beginnender Wechselstromspannungsverzerrungen zu niedrigeren Klemmenspannungen hin verlagert, so dass bei einem maximalen Schleifenstrom von 100 mA und einem Klemmenspannungsmittelwert von 5,5 V die Verlustleistung der Schaltungsanordnung nur 550 mW beträgt. Ohne die erfindungsgemässe Schaltungsanordnung und einer dann erforderlichen mittleren Klemmenspannung von etwa 8,5 V wäre die Verlustleistung jedoch 850 mW, so dass dann bereits aufwendige Kühlmassnahmen erforderlich wären. Auch würde eine mittlere Klemmenspannung von 8,5 V mit einer überlagerten Wechselspannungsamplitude von 3 V Spitzenspannungen von 11,5 V ergeben, die zu technologischen Schwierigkeiten im integrierten Schaltkreis führen würden. Bei der erfindungsgemässen Schaltungsanordnung liegt dagegen die maximale Spitzenspannung unter 10 V und damit im sicheren Bereich.

Die bis hier beschriebene Schaltung zeigt zwischen den Klemmen K1 und K2 einen Wechselstromwiderstand, der unter dem gewünschten Sollwert von beispielsweise 500 Ω liegt. Daher ist eine weitere Schaltungsmassnahme vorgesehen, welche den Wechselstromwiderstand der Schaltungsanordnung auf den gewünschten Wert anhebt. Sie besteht aus der Reihenschaltung eines Kondensators 4 mit einem Widerstand 5, die zwischen Basisspannungsteiler 6, 7 und der einen Anschlussklemme K1 geschaltet ist.

Der Widerstand 5 erlaubt einem zusätzlichen Teil der Schleifenwechselspannung, auf die Basis des Transistors 12 einzuwirken, so dass die Differenz der zwischen Emitter und Basis des Transistors 12 liegenden Wechselspannung mit abnehmendem Widerstandwert des Widerstandes 5 kleiner wird und dadurch der Innenwiderstand (Wechselstromwiderstand zwischen Kollektor und Emitter) des Transistors 12 ansteigt. Da die Reihenschaltung aus Widerstand 14 und Innenwiderstand des Transistors 12 erheblich zum Wechselstromwiderstand zwischen den Klemmen K1 und K2 beiträgt, ist folglich mit der Wahl des Widerstandes 5 ein gewünschter Wechseltromwiderstand zwischen den Klemmen K1 und K2 einstellbar.

**Patentansprüche**

1. Schaltungsanordnung zum Speisen einer eine konstante Betriebsspannung liefernden Stromversorgungseinrichtung (20) über eine den Speisegleichstrom bestimmende Einrichtung in Teilnehmerstationen von zentralgespeisten Fernmeldeanlagen, insbesondere Fernsprechvermittlungsanlagen, bei der die den Speisegleichstrom bestimmende Einrichtung als gegengekoppelte Verstärkerstufe (6, 7, 12, 13, 14) ausgebildet ist, dadurch gekennzeichnet, dass in Abhängigkeit von der Grösse der Eingangsspannung (Spannung an K1, K2 bzw. Spannungsabfall an 6, 7) wirksam werdende Schaltmittel (8, 9, 11) bei zum Speisen der Stromversorgungseinrichtung (20) ausreichender Grösse der Eingangsspannung den Speisestromkreis ($I_1$: K1, 14, 13, 20, K2) durchschalten (13 durchlässig, 8 gesperrt) und bei zum Speisen der Stromversorgungseinrichtung (20) nicht ausreichender Grösse der Eingangsspannung den Speisestromkreis unterbrechen und einen die Stromversorgungseinrichtung (20) umgehenden Belastungsstromkreis ($I_2$: K1, 14, 8, K2) durchschalten (13 gesperrt, 8 durchlässig).

2. Schaltungsanordnung nach Anspruch 1, dadurch gekennzeichnet, dass die gegengekoppelte Verstärkerschaltung aus einer komplementären Darlington-Schaltung (12, 13) besteht, deren emitterseitiger Transistor (12) eines ersten Leitfähigkeitstyps über einen Emitterwiderstand (14) an die eine Anschlussklemme (K1) der Anschlussleitung und mit der Basis an einen an die beiden Anschlussklemmen (K1, K2) der Anschlussleitung geschalteten Basisspannungsteiler (6, 7) angeschlossen ist und deren kollektorseitiger Transistor (13) vom zweiten Leitfähigkeitstyp mit seinem Emitter mit der Stromversorgungseinrichtung (20) verbunden ist.

3. Schaltungsanordnung nach Anspruch 2, dadurch gekennzeichnet, dass als Schaltmittel (8, 9, 11) ein erster Transistor (11) vom zweiten Leitfähigkeitstyp und ein zweiter Transistor (9) vom ersten Leitfähigkeitstyp vorgesehen sind, wobei der erste Transistor (11) mit seinem Kollektor am Verbindungspunkt zwischen Emitterwiderstand (14) und emitterseitigem Transistor (12) der Darlington-Schaltung, mit seiner Basis am Verbindungspunkt zwischen Basisspannungsteiler (6, 7) und Basis des emitterseitigen Transistors (12) der Darlington-Schaltung und mit seinem Emitter zum einen über einen Widerstand (10) an der anderen Anschlussklemme (K2) der Anschlussleitung und zum anderen an der Basis des zweiten Transistors (9) angeschlossen ist und der zweite Transistor (9) mit seinem Emitter am Verbindungspunkt zwischen Kollektor des emitterseitigen Transistors (12) der Darlington-Schaltung und Basis des kollektorseitigen Transistors (13) der Darlington-Schaltung und mit seinem Kollektor an der Basis eines im Belastungsstromkreis liegenden dritten Transistors (8) vom zweiten Leitfähigkeitstyp angeschlossen ist, wobei der dritte Transistor (8) mit seinem Kollektor am Verbindungspunkt zwischen Emitterwiderstand (14) und emitterseitigem Transistor (12) der Darlington-Schaltung und mit seinem Emitter an der anderen Anschlussklemme (K2) angeschlossen ist und der dritte Transistor (8), gesteuert vom zweiten Transistor (9), den Belastungsstromkreis schaltet.

4. Schaltungsanordnung nach einem der vorangegangenen Ansprüche, dadurch gekennzeichnet, dass zur Einstellung eines gewünschten Wechselstromwiderstandes zwischen den Anschlussklemmen (K1, K2) eine Reihenschaltung eines Kondensators (4) mit einem Widerstand (5) zwischen Basisspannungsteiler (6, 7) und der einen Anschlussklemme (K1) geschaltet ist.

**Claims**

1. Circuit arrangement for the feeding of a current supply equipment (20), which delivers a constant operating voltage, through an equipment determining the unidirectional feed current in subscriber stations of centrally fed telecommunications installations, particularly of telephone exchanges, in which arrangement the equipment determining the unidirectional feed current is constructed as amplifier stage (6, 7, 12, 13, 14) with negative feedback, characterised thereby, that switch means (8, 9, 11), which become effective in dependence on the magnitude of the input voltage (voltage across K1 and K2 or voltage drop across 6 and 7), switch the feed current circuit ($I_1$: K1, 14, 13, 20, K2) through (13 conductive, 8 blocked) when the magnitude of the input voltage is sufficient for the feeding of the current supply equipment (20) and interrupt the feed current and switch through a loading current circuit ($I_2$: K1, 14, 8, K2), (13 blocked, 8 conductive) bypassing the current supply equipment (20) when the magnitude of the input voltage is insufficient for the feeding of the current supply equipment (20).

2. Circuit arrangement according to claim 1, characterised thereby, that the amplifier circuit with negative feedback consists of a complementary Darlington circuit (12, 13), the emitter-sided transistor (12) of which is of a first conductivity type and connected through an emitter resistor (14) to the one connecting terminal (K1) of the connecting line and by the base to a base voltage divider (6, 7) connected to both the connecting terminals (K1, K2) of the connecting line and the collector-sided transistor (13) of which is of the second conductivity type and connected by its emitter with the current supply equipment (20).

3. Circuit arrangement according to claim 2, characterised thereby, that a first transistor (11) of the second conductivity type and a second transistor (9) of the first conductivity type are provided as switch means (8, 9, 11), wherein the first transistor (11) is connected by its collector to the junction between emitter resistor (14) and the emitter-sided transistor (12) of the Darlington circuit, by its base to the junction between base voltage divider (6, 7) and base of the emitter-sided transistor (12) of the Darlington circuit and by its emitter on the one hand through a resistor (10) to the other connecting terminal (K2) of the connecting line and on the other hand to the base of the second transistor (9) and the second transistor (9) is connected by its emitter to the junction between the collector of the emitter-sided transistor (12) of the Darlington circuit and the base of the collector-sided transistor (13) of the Darlington circuit and by its collector to the base of a third transistor (8) of the second conductivity type lying in the loading current circuit, wherein the third transistor (8) is connected by its collector to the junction between emitter resistor (14) and the emitter-sided transistor (12) of the Darlington circuit and by its emitter to the other connecting terminal (K2) and the third transistor (8), controlled by the second transistor (9), switches the loading current circuit.

4. Circuit arrangement according to one of the preceding claims, characterised thereby, that a series circuit of a capacitor (4) with a resistor (5) is connected between base voltage divider (6, 7) and the one connecting terminal (K1) for the setting of a desired alternating current resistance between the connecting terminals (K1, K2).

**Revendications**

1. Montage pour l'alimentation d'un dispositif (20) délivrant une tension de service constante, par l'intermédiaire d'un dispositif déterminant le courant continu d'alimentation dans les postes d'abonné d'installations de télécommunications à alimentation centrale, et en particulier d'installations téléphoniques, et dans lequel le dispositif déterminant le courant continu d'alimentation est réalisé sous forme d'un étage amplificateur à contre-réaction (6, 7, 12, 13, 14), ledit montage étant caractérisé en ce que des moyens de commutation (8, 9, 11), agissant en fonction de la valeur de la tension d'entrée (tension sur K1, K2 ou chute de tension sur 6, 7) connectent (13 passant, 8 bloqué) le circuit d'alimentation ($I_1$: K1, 14, 13, 20, K2) dans le cas d'une tension d'entrée suffisante pour alimenter le dispositif (20), et interrompre le circuit d'alimentation et connectent (13 bloqué, 8 passant) un circuit de charge ($I_2$: K1, 14, 8, K2) dans le cas d'une tension d'entrée insuffisante pour alimenter le dispositif (20).

2. Montage selon revendication 1, caractérisé en ce que le circuit amplificateur à contre-réaction est constitué par un montage Darlington complémentaire (12, 13), dont le transistor émetteur (12) d'un premier type de conduction est relié par une résistance d'émetteur (14) à une borne (K1) de la ligne d'abonné, la base étant reliée à un diviseur de tension de base (6, 7) branché entre les deux bornes (K1, K2) de la ligne d'abonné, et dont le transistor collecteur (13) du second type est relié par son émetteur au dispositif d'alimentation en courant (20).

3. Montage selon revendication 2, caractérisé en ce que les moyens de commutation (8, 9, 11) sont constitués par un premier transistor (11) du second type et un second transistor (9) du premier type, le premier transistor (11) étant relié par son collecteur au point de connexion entre la résistance d'émetteur (14) et le transistor émetteur (12) du montage Darlington, par sa base au point de connexion entre le diviseur de tension de base (6, 7) et la base du transistor émetteur (12) du montage Darlington, et par son émetteur à la seconde borne (K2) de la ligne d'abonné, par l'intermédiaire d'une résistance (10) et à la base du second transistor (9); et le second transistor (9) est relié par son émetteur au point de connexion entre le collecteur du transistor émetteur (12) du montage Darlington et la base du transistor collecteur (13) du montage Darlington, et par son collecteur à la base d'un troisième transistor (8) du second type, inséré dans le circuit de charge, le troisième transistor (8) étant relié par son collecteur au point de connexion entre la résistance d'émetteur (14) et le transistor émetteur (12) du montage Darlington, et par son émetteur à la seconde borne (K2); et le troisième transistor (8), commandé par le second transistor (9), commute le circuit de charge.

4. Montage selon une quelconque des revendications 1 à 3, caractérisé par le montage en série d'un condensateur (4) et d'une résistance (6), branché entre le diviseur de tension de base (6, 7) et la première borne (K1), pour le réglage d'une impédance souhaitée entre les bornes (K1, K2).

FIG.1

FIG.2

FIG.3

FIG.4

FIG.5